# EUROPEAN PATENT APPLICATION

(11) **EP 4 386 519 A1**
(43) Date of publication of application: **19.06.2024**
(21) Application number: 23216406.1
(22) Date of filing: 13.12.2023
(51) Int. Cl.: G06F 1/3203, G06F 1/20, G06F 1/3215, G06F 3/01

(54) **ELECTRONIC DEVICE WITH CENTRALIZED USER EXPERIENCE MANAGER**

(30) Priority: 16.12.2022 US 202263433383 P; 08.12.2023 US 202363607635 P; 11.12.2023 US 202318535797
(71) Applicant: Apple Inc., Cupertino CA 95014 (US)
(72) Inventor: JUN, David M., Boulder (US); KANNAN, Arun, Mountain View (US); RAGHUNATH, Kaushik, Pleasanton (US); SHARMA, Nikhil, Fremont (US); DUGGINENI, Venu M., San Jose (US)
(74) Representative: Froud, Christopher Andrew

(57) **Abstract**

An electronic device (10) may include software and hardware subsystems that are centrally controlled by a user experience manager (30). The user experience manager (30) can identify a current user context and enforce a corresponding power and performance policy for the various subsystems that is optimized for the current user context. The user experience manager (30) can provide a set of restrictions at the launch of a user experience, can allow the various subsystems to vary their dynamic behavior based on current operating conditions as long as the dynamic adjustments do not violate the restrictions, and can perform a series of thermal mitigation operations as the internal temperature of the electronic device (10) varies. The centralized user experience manager (30) can also be configured to predict a user context based on monitored states of the subsystems and monitored application usage on the electronic device (10).

## Description

This application claims priority to U.S. patent application No. 18/535,797, filed December 11, 2023, U.S. provisional patent application No. 63/607,635, filed December 8, 2023, and U.S. provisional patent application No. 63/433,383, filed December 16, 2022.

### Field

This relates generally to electronic devices and, more particularly, to devices having multiple subsystems.

### Background

An electronic device such as a head-mounted device can include multiple subsystems that are configured to provide different functions for a user. The power consumption of a first subsystem in an electronic device can be controlled using a first control loop, whereas the power consumption of a second subsystem in the electronic device can be controlled using a second control loop independent of the first control loop. Managing power consumption of the various subsystems using separate decentralized control loops may be inefficient.

It is within this context that the embodiments herein arise.

### Summary

An electronic device may include a centralized user experience manager configured to manage power, thermal, and performance tradeoffs among various subsystems on the electronic device. An aspect of the disclosure provides a method that includes identifying a user context based a behavior of a plurality of subsystems and placing a restriction on at least one of the plurality of subsystems based on the identified user context using the centralized user experience manager operable to control the plurality of subsystems. Identifying a user context can include monitoring an assertion from one or more of the subsystems or monitoring the behavior of one or more of the subsystems. The centralized user experience manager can place restriction(s), including limiting a frequency, limit the dynamic behavior, limiting a resolution, disabling a function of the at least one of the plurality of subsystems based on the identified user context, or switching from a first reduced power mode to a second reduced power mode. The centralized user experience manager can perform thermal mitigation operations when detecting a rising temperature and/or can perform user discomfort mitigation operations when detecting or predicting that the user is experiencing visual discomfort.

An aspect of the disclosure provides a method that includes identifying a current use case based on one or more signals output from the plurality of subsystems, measuring an internal temperature of the electronic device, and using a centralized user experience manager operable to control the plurality of subsystems to perform thermal mitigation operations while minimizing impact on the current use case in response to detecting that the internal temperature is rising. The centralized user experience manager can adjust thermal mitigation knobs from a list to control the plurality of subsystems, where the list of thermal mitigation knobs is ordered based on an amount of impact each of the subsystem knobs has on the current use case. The list of thermal mitigation knobs can include limiting a frame rate of a graphics rendering subsystem, limiting automatic speech recognition (ASR), text-to-speech (TTS), and dictation quality of a voice-controlled automated assistant subsystem, limiting a streaming quality of a media streaming subsystem, limiting a frequency of a face and body tracking subsystem, limiting a number of foreground applications currently presented to a user of the electronic device, limiting a frequency of a hands tracking subsystem or limiting a frequency of a gaze tracking subsystem.

An aspect of the disclosure provides a method that includes identifying a user mode based on one or more signals output from the plurality of subsystems, adjusting a behavior of one or more of the plurality of subsystems based on a current operating condition, and placing a restriction on at least one of the plurality of subsystems based on the identified user mode using a centralized user experience manager. The method can optionally include idling a hands tracking subsystem in the plurality of subsystems when no hands are being detected and using the centralized user experience manager to limit a maximum frequency of the hands tracking subsystem. The method can optionally include adjusting a fan speed of a fan subsystem based on an internal temperature of the electronic device and proactively increasing or decreasing the fan speed of the fan subsystem based on the identified user mode. The method can optionally include freezing an application that is outside a user's field of view and using the centralized user experience manager to freeze an application that is inside the user's field of view.

An aspect of the disclosure provides a method that includes monitoring one or more states of the subsystems, predicting a user context based on the monitored states, estimating a power consumption level of the predicted user context, and selectively adjusting, with the centralized user experience manager, at least one of the subsystems based on the estimated power consumption level of the predicted user context. The method can further include maintaining historical data of past monitored states of the subsystems, monitoring a usage of one or more applications running on the electronic device, predicting the user context based on the monitored usage of one or more applications running on the electronic device, and maintaining historical data of past monitored usage of one or more applications running on the electronic device. The method can further include predicting a time when the electronic device will be charged to charge a battery in the electronic device and selectively adjusting at least one of the subsystems based on the predicted time of when the electronic device will be charged.

An aspect of the disclosure provides a method that includes monitoring one or more states of the various subsystems, identifying a user context based on the monitored states of the plurality of subsystems, estimating a power consumption level of the identified user context, and
reducing, with the centralized user experience manager, power drawn from the battery by adjusting at least one of the plurality of subsystems based on the estimated power consumption level of the identified user context. The method can further include reducing a frame rate of one or more sensors in the device and/or deactivating or limiting resource usage of an algorithm for processing sensor data on the device to reduce the power drawn from the battery. The method for reducing power drawn from the battery can optionally include operating the electronic device in an audio-only feedback mode during which the electronic device outputs only audio or haptic alerts without outputting any visual alerts, operating the electronic device in a single color mode during which the electronic device displays only black and white or grayscale content, reducing display brightness, constraining or deactivating a graphics rendering subsystem in the device, constraining or deactivating a scene understanding subsystem in the device, limiting wireless connectivity of the device, and/or reducing a pull rate with which the device checks for application notifications.

An aspect of the disclosure provides a method that includes capturing images of a scene, outputting the captured images as a passthrough video feed, determining whether the passthrough video feed is being displayed to a user, and adjusting at least one of the subsystems associated with processing the passthrough video feed in response to determining that the passthrough video feed is not being displayed to the user. Adjusting the at least one of the subsystems associated with processing the passthrough video feed can include throttling down one or more of: a scene understanding subsystem, a subsystem configured to perform point-of-view correction, and a subsystem configured to model environment lighting.

### Brief Description of the Drawings

FIG. 1 is a schematic diagram of an illustrative electronic device in accordance with some embodiments.
FIG. 2 is a block diagram showing illustrative subsystems that can be managed using a centralized user experience manager within an electronic device in accordance with some embodiments.
FIG. 3 is a flow chart of illustrative steps for operating a centralized user experience manager of the type shown in FIG. 2 in accordance with some embodiments.
FIG. 4 is a table showing how different sets of subsystem assertions can result in different use case scenarios with different sets of limits at experience launch time in accordance with some embodiments.
FIG. 5 is a table showing different thermal mitigation knobs that can be used to help reduce temperature on an electronic device in accordance with some embodiments.
FIG. 6 is a table showing different subsystem adjustments that can be made in different user discomfort scenarios in accordance with some embodiments.
FIG. 7 is a diagram of an illustrative centralized user experience manager 30 having a context engine configured to predict user activity and system state in accordance with some embodiments.
FIG. 8 is a flow chart of illustrative steps for operating a context engine of the type shown in FIG. 7 in accordance with some embodiments.
FIG. 9 is a table of illustrative knobs that can be adjusted by a centralized user experience manager to conserve battery in an electronic device in accordance with some embodiments.

### Detailed Description

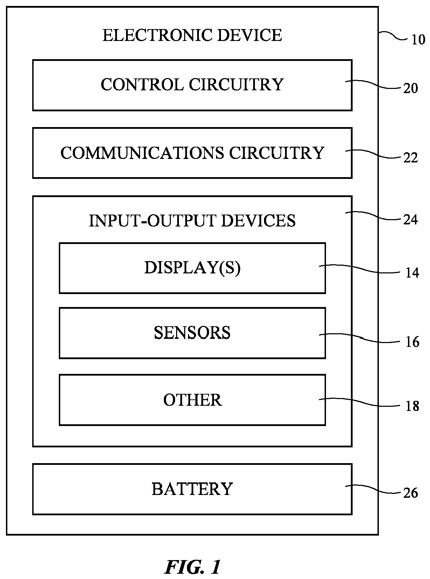

An illustrative electronic device is shown in FIG. 1. Electronic device 10 may be a computing device such as a laptop computer, a computer monitor containing an embedded computer, a tablet computer, a cellular telephone, a media player, or other handheld or portable electronic device, a smaller device such as a wrist-watch device, a pendant device, a headphone or earpiece device, a device embedded in eyeglasses or other equipment worn on a user's head, or other wearable or miniature device, a display, a computer display that contains an embedded computer, a computer display that does not contain an embedded computer, a gaming device, a navigation device, an embedded system such as a system in which electronic equipment with a display is mounted in a kiosk or automobile, or other electronic equipment. Electronic device 10 may have the shape of a pair of eyeglasses (e.g., supporting frames), may form a housing having a helmet shape, or may have other configurations to help in mounting and securing the components of one or more displays on the head or near the eye of a user.

As shown in FIG. 1, electronic device 10 may have control circuitry 20. Control circuitry 20 may be configured to perform operations in electronic device 10 using hardware (e.g., dedicated hardware or circuitry), firmware and/or software. Software code for performing operations in electronic device 10 and other data is stored on non-transitory computer readable storage media (e.g., tangible computer readable storage media) in control circuitry 20. The software code may sometimes be referred to as software, data, program instructions, instructions, or code. The non-transitory computer readable storage media (sometimes referred to generally as memory) may include non-volatile memory such as non-volatile random-access memory (NVRAM), one or more hard drives (e.g., magnetic drives or solid-state drives), one or more removable flash drives or other removable media, or the like. Software stored on the non-transitory computer readable storage media may be executed on the processing circuitry of control circuitry 20. The processing circuitry may include application-specific integrated circuits with processing circuitry, one or more microprocessors, digital signal processors, graphics processing units, a central processing unit (CPU) or other processing circuitry.

To support communications between device 10 and external equipment, control circuitry 20 may communicate using communications circuitry 22. Communications circuitry 22 may include antennas, radio-frequency transceiver circuitry, and other wireless communications circuitry and/or wired communications circuitry. Circuitry 22, which may sometimes be referred to as control circuitry, control and communications circuitry, and/or a communications subsystem, may support bidirectional wireless communications between device 10 and external equipment (e.g., a companion device such as a computer, cellular telephone, or other electronic device, an accessory such as a point device or a controller, computer stylus, or other input device, speakers or other output devices, etc.) over a wireless link.

For example, communications circuitry 22 may include radio-frequency transceiver circuitry such as wireless local area network transceiver circuitry configured to support communications over a wireless local area network link, near-field communications transceiver circuitry configured to support communications over a near-field communications link, cellular telephone transceiver circuitry configured to support communications over a cellular telephone link, or transceiver circuitry configured to support communications over any other suitable wired or wireless communications link. Wireless communications may, for example, be supported over a Bluetooth^{®} link, a WiFi^{®} link, a wireless link operating at a frequency between 10 GHz and 400 GHz, a 60 GHz link, or other millimeter wave link, a cellular telephone link, or other wireless communications link. Device 10 may, if desired, include power circuits for transmitting and/or receiving wired and/or wireless power and may include batteries or other energy storage devices. For example, device 10 may include a coil and rectifier to receive wireless power that is provided to circuitry in device 10.

Electronic device 10 may also include input-output circuitry 24. Input-output circuitry 24 may be used to allow data to be received by electronic device 10 from external equipment (e.g., a tethered computer, a portable device such as a handheld device or laptop computer, or other electrical equipment) and to allow a user to provide electronic device 10 with user input. Input-output circuitry 20 may also be used to gather information on the environment in which electronic device 10 is operating. Output components in circuitry 20 may allow electronic device 10 to provide a user with output and may be used to communicate with external electrical equipment.

As shown in FIG. 1, input-output circuitry 24 may include a display such as display 14. Display 14 may be used to display images for a user of electronic device 10. Display 14 may be a transparent display so that a user may observe physical objects through the display while computer-generated content is overlaid on top of the physical objects by presenting computer-generated images on the display. A transparent display may be formed from a transparent pixel array (e.g., a transparent organic light-emitting diode display panel) or may be formed by a display device that provides images to a user through a beam splitter, holographic coupler, or other optical coupler (e.g., a display device such as a liquid crystal on silicon display).

Alternatively, display 14 may be an opaque display that blocks light from physical objects when a user operates electronic device 10. In this type of arrangement, a passthrough or front-facing camera may be used to capture images of the physical environment, and the physical environment images may be displayed on the display for viewing by the user. The real-world content being captured by the front-facing cameras is therefore sometimes referred to as a camera passthrough feed, a (live) video passthrough feed, or a passthrough video feed (stream). Additional computer-generated content (e.g., text, game-content, other visual content, etc.) may optionally be overlaid over the physical environment images to provide an extended reality environment for the user. When display 16 is opaque, the display may also optionally display entirely computer-generated content (e.g., without displaying images of the physical environment).

Display 16 may include one or more optical systems (e.g., lenses) (sometimes referred to as optical assemblies) that allow a viewer to view images on display(s) 14. A single display 14 may produce images for both eyes or a pair of displays 14 may be used to display images. In configurations with multiple displays (e.g., left and right eye displays), the focal length and positions of the lenses may be selected so that any gap present between the displays will not be visible to a user (e.g., so that the images of the left and right displays overlap or merge seamlessly). Display modules (sometimes referred to as display assemblies) that generate different images for the left and right eyes of the user may be referred to as stereoscopic displays. The stereoscopic displays may be capable of presenting two-dimensional content (e.g., a user notification with text) and three-dimensional content (e.g., a simulation of a physical object such as a cube).

Input-output circuitry 24 may include various other input-output devices. For example, input-output circuitry 24 may include sensors 16. Sensors 16 may include one or more outward-facing cameras (that face the physical environment around the user when electronic device 10 is mounted on the user's head, as one example). The cameras may capture visible light images, infrared images, or images of any other desired type. The cameras may be stereo cameras if desired. Outward-facing cameras may capture passthrough video for device 10.

Sensors 16 may also include position and motion sensors (e.g., compasses, gyroscopes, accelerometers, and/or other devices for monitoring the location, orientation, and movement of electronic device 10, satellite navigation system circuitry such as Global Positioning System circuitry for monitoring user location, etc.). With such position and motion sensors, for example, control circuitry 20 can monitor the current direction in which a user's head is oriented relative to the surrounding environment (e.g., a user's head pose). The outward-facing cameras in may also be considered part of the position and motion sensors. The outward-facing cameras may be used for face tracking (e.g., by capturing images of the user's jaw, mouth, etc. while the device is worn on the head of the user), body tracking (e.g., by capturing images of the user's torso, arms, hands, legs, etc. while the device is worn on the head of user), and/or for localization (e.g., using visual odometry, visual inertial odometry, or other simultaneous localization and mapping (SLAM) technique).

Input-output circuitry 24 may also include other sensors and input-output components 18 if desired (e.g., gaze tracking sensors, ambient light sensors, force sensors, temperature sensors, touch sensors, image sensors for detecting hand gestures or body poses, buttons, capacitive proximity sensors, light-based proximity sensors, other proximity sensors, strain gauges, gas sensors, pressure sensors, moisture sensors, magnetic sensors, microphones, speakers, audio components, haptic output devices such as actuators, light-emitting diodes, other light sources, etc.).

Device 10 may further include an energy storage device such as battery 26. Battery 26 may be a rechargeable energy storage device configured to provide electrical power to operate the various components and subsystems within device 10. Battery 26 may have a battery capacity that is typically measured in milliampere-hours (mAh). The current level of charge in battery 26 can be referred to herein as a "battery level" or a "state of charge." To ensure longevity of battery 26, device 10 may follow best practices for battery management, such as avoiding extreme operating temperatures, avoiding overcharging the battery, and minimizing full charge and discharge cycles. Components 18 can optionally include a battery sensor configured to detect the state of charge of battery 26, a power sensor configured to detect a power drawn from battery 26, a voltage sensor configured to detect a voltage at battery 26, and/or a current sensor configured to detect a current drawn from battery 26. Components 18 can also include one or more temperature sensor(s) for measuring a temperature of battery 26 or other components within device 10.

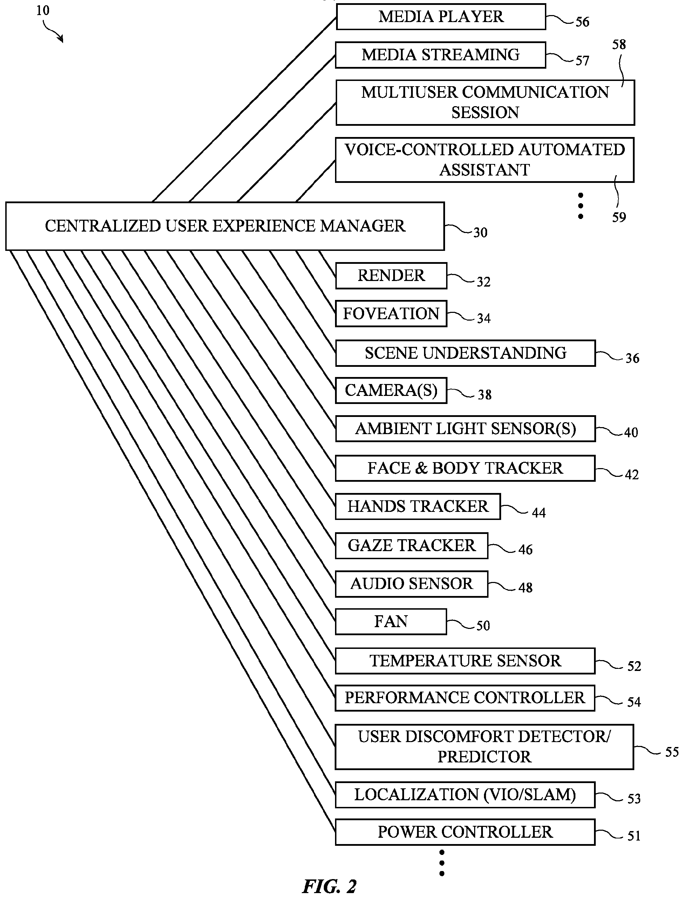

FIG. 2 is a block diagram showing illustrative subsystems that can be included within device 10. The various subsystems shown in FIG. 2 may be software and/or hardware components. As shown in FIG. 2, device 10 may include a media player subsystem such as media player 56, a media streaming subsystem such as media streaming application 57, a multiuser communication session subsystem such as a multiuser communication session application 58, a voice-controlled automated assistant subsystem such as voice-controlled automated assistant 59, and/or other user applications. Media player subsystem 56 can be used to play movie (cinematic) content or other immersive media content on device 10. Media streaming subsystem 57 can be used to stream media content playing on or from external electronic equipment (e.g., a companion device such as a cellular telephone that has been paired with device 10).

Multiuser communication session subsystem 58 can be used to establish a multiuser communication session. Herein, a multiuser communication session refers to a communication session in which two or more devices are participating in an extended reality (XR) environment. The multiuser communication session subsystem 58 may control the XR content presented using device 10 during a multiuser communication session. During a multiuser communication session, multiple electronic devices can be connected via a network. Some of the electronic devices (and corresponding users) may be located in different physical environments, whereas some of the electronic devices (and corresponding users) in the multiuser communication session may be located in the same physical environment.

Voice-controlled automated assistant subsystem 59 can be used to monitor voice commands from a user and perform various functions in response to the user's voice commands. For example, voice-controlled automated assistant 59 can be used to, in response to a voice command, play content such as audio and video content, run games or other software, process online database search requests (e.g., internet searches), process orders for products and services, provide a user with calendar information, receive and process email, handle audio communications (e.g., telephone calls), handle video calls (e.g., multiuser communication sessions with accompanying audio), and/or handle other tasks.

The example of FIG. 2 in which device 10 includes at least media player 56, media streaming application 57, multiuser communication session application 58, and voice-controlled automated assistant 59 is merely illustrative. In other embodiments, device 10 may be provided with any number of additional application-level software subsystems that are used to support different active use cases for device 10.

Still referring to FIG. 2, device 10 may further include a rendering subsystem such as graphics rendering subsystem 32, a foveation subsystem such as dynamic foveation subsystem 34, a scene understanding subsystem such as scene understanding subsystem 36, one or more camera(s) 38, one or more ambient light sensor(s) 40, face and body tracking system such as face and body tracker 42, a hands tracking subsystem such as hands tracker 44, a gaze tracking subsystem such as gaze tracker 46, one or more audio sensor(s) 48, one or more fan(s) 50, one or more temperature sensor(s) 52, a performance controller 54, and/or other low-level system health monitoring component.

Graphics rendering subsystem 32 can be configured to render or generate virtual reality (VR) content, augmented reality (AR) content, mixed reality (MR) content, extended reality (XR) content, or may be used to carry out other graphics processing functions. Rendering subsystem 32 can synthesize photorealistic or non-photorealistic images from one or more 2-dimensional or 3-dimensional model(s) defined in a scene file that contains information on how to simulate a variety of features such as information on shading (e.g., how color and brightness of a surface varies with lighting), shadows (e.g., how to cast shadows across an object), texture mapping (e.g., how to apply detail to surfaces), reflection, transparency or opacity (e.g., how light is transmitted through a solid object), translucency (e.g., how light is scattered through a solid object), refraction and diffraction, depth of field (e.g., how certain objects can appear out of focus when outside the depth of view), motion blur (e.g., how certain objects can appear blurry due to fast motion), and/or other visible features relating to the lighting or physical characteristics of objects in a scene. Rendering subsystem 32 can apply rendering algorithms such as rasterization, ray casting, ray tracing, and/or radiosity.

Foveation subsystem 34 (sometimes referred to as a dynamic foveation block) can be configured to adjust the detail or quality of a video feed based on the user's gaze, for example by increasing image detail or resolution of a video feed in the area of the user's gaze and/or reducing image detail or resolution of the video feed in areas not aligned with the user's gaze. Scene understanding subsystem 36 can be configured to detect various types of objects in an image (e.g., to detect whether a static object is a wall, to detect whether a moving object is a dog, to determine where each detected object is located in a scene, etc.), maintain a representation of the user's environment over time, and/or detect the location of the user and objects in an image relative to the user's environment.

Camera(s) 38 may include one or more outward-facing cameras (e.g., cameras that face the physical environment around the user when the electronic device is mounted on the user's head, as one example). Camera(s) 38 include image sensors that capture visible light images, infrared images, or images of any other desired type. Camera(s) 38 may be stereo cameras if desired. Outward-facing cameras 38 may capture a pass-through video feed for device 10. Device 10 may have any suitable number of cameras 38. For example, device 10 may have K cameras, where the value of K is at least one, at least two, at least four, at least six, at least eight, at least ten, at least 12, less than 20, less than 14, less than 12, less than 10, 4-10, or other suitable value.

Device 10 may also include additional light sensors such as one or more ambient light sensor(s) 40. Ambient light sensor 40 can have a wider dynamic range and better spectral resolution than a color image sensor within camera 38 and can therefore be used to more effectively capture the absolute light level and color information from the real-world environment. Since ambient light sensor 40 has a larger dynamic range and enhanced spectral resolution than camera 38, ambient light sensor 40 can provide additional useful information for modeling the environment even when measurements from cameras 38 saturate.

Face and body tracking subsystem 42 may include one or more outward-facing cameras that are used for face tracking (e.g., by capturing images of the user's jaw, mouth, etc. while the device is worn on the head of the user), body tracking (e.g., by capturing images of the user's torso, arms, hands, legs, etc. while the device is worn on the head of user). Face and body tracking subsystem 42 can therefore sometimes be referred to as being part of camera(s) 38. If desired, body tracking subsystem 42 can also track the user's head pose by directly determining any movement, yaw, pitch, roll, etc. for device 10. The yaw, roll, and pitch of the user's head may collectively define a user's head pose.

Hands tracker 44 may include one or more sensors 72 configured to monitor a user's hand motion/gesture to obtain hand gestures data. For example, hands tracker 44 may include a camera and/or other gestures tracking components (e.g., outward facing components and/or light sources that emit beams of light so that reflections of the beams from a user's hand may be detected) to monitor the user's hand(s). One or more handstracking sensor(s) may be directed towards a user's hands and may track the motion associated with the user's hand(s), may determine whether the user is performing a swiping motion with his/her hand(s), may determine whether the user is performing a non-contact button press or object selection operation with his/her hand(s), may determine whether the user is performing a grabbing or gripping motion with his/her hand(s), may determine whether the user is pointing at a given object that is presented on display 14 using his/her hand(s) or fingers, may determine whether the user is performing a waving or bumping motion with his/her hand(s), or may generally measure/monitor three-dimensional non-contact gestures ("air gestures") associated with the user's hand(s).

The hand gestures information gathered using hands tracker 44 may be used to provide user input to electronic device 10. For example, a user's hand or finger may serve as a cursor that selects a region of interest on display 14. Non-contact air gestures information is a useful user input technique in extended reality systems with displays that present images close to a user's eyes (and direct contact touch input is therefore not practical). If desired, hands tracker 44 may also track the motion of a controller if the user is holding such controller to control the operation of device 10.

Gaze tracker 46 can be configured to gather gaze information or point of gaze information. Gaze tracker 46 may include one or more inward facing camera(s) and/or other gaze-tracking components (e.g., eye-facing components and/or other light sources that emit beams of light so that reflections of the beams from a user's eyes may be detected) to monitor the user's eyes. One or more gaze-tracking sensor(s) may face a user's eyes and may track a user's gaze. A camera in gaze-tracking subsystem 46 may determine the location of a user's eyes (e.g., the centers of the user's pupils), may determine the direction in which the user's eyes are oriented (the direction of the user's gaze), may determine the user's pupil size (e.g., so that light modulation and/or other optical parameters and/or the amount of gradualness with which one or more of these parameters is spatially adjusted and/or the area in which one or more of these optical parameters is adjusted based on the pupil size), may be used in monitoring the current focus of the lenses in the user's eyes (e.g., whether the user is focusing in the near field or far field, which may be used to assess whether a user is day dreaming or is thinking strategically or tactically), and/or other gaze information. Cameras in gaze tracker 46 may sometimes be referred to as inward-facing cameras, gaze-detection cameras, eyetracking cameras, gaze-tracking cameras, or eye-monitoring cameras. If desired, other types of image sensors (e.g., infrared and/or visible light-emitting diodes and light detectors, etc.) may also be used in monitoring a user's gaze.

The user's point of gaze gathered using gaze tracker 46 may be used to provide user input to electronic device 10. For example, a user's point of gaze may serve as a cursor that selects a region of interest on display 14. Point of gaze is a useful user input technique in extended reality systems with displays that present images close to a user's eyes (and touch input is therefore not practical).

Audio sensor(s) 48 can be a microphone that is used to measure an ambient noise level of the environment surrounding device 10. Fan subsystem 50 may have a fan speed that optionally depends on the amount of ambient noise measured by audio sensor 48. Fan 50 can be physically coupled to one or more processor(s) within device 10 such as a central processing unit (CPU), a graphics processing unit (GPU), and/or other high performance computing component that can generate a substantial amount of heat that needs to be actively dissipated by fan 50. Device 10 can include more than one fan subsystem 50 (e.g., device 10 might include two or more fans, three or more fans, two to five fans, five to ten fans, or more than ten fans).

Fan 50 may have a fan speed that is controlled based on a temperature level measured using an associated temperature sensor 52. Temperature sensor 52 may monitor the temperature of an associated CPU or GPU or may monitor an ambient temperature level within the housing of device 10. Device 10 can optionally include more than one temperature sensor 52 (e.g., device 10 might include two or more temperature sensors disposed at different portions within the device, three or more temperature sensors, two to five temperature sensors, five to ten temperature sensors, or more than ten temperature sensors disposed at various location within the device). When the temperature measurement obtained using sensor 52 rises, the speed of fan 50 can be increased to help lower the temperature. When the temperature measurement obtained using sensor 52 falls, the fan speed of fan 50 can be lowered to help conserve power and minimize fan noise.

Performance controller 54 can be configured to control the performance of one or more low-level subsystems within device 10. The example of FIG. 2 in which device 10 includes at least subsystems 32, 34, 36, 38, 40, 42, 44, 46, 48, 50, 52, and 54 is merely illustrative. In other embodiments, device 10 may be provided with any number of additional auxiliary compute blocks, sensors, or other low-level system health monitoring components for tracking one or more parameters associated with the internal operation of device 10.

Device 10 may also be provided with a user discomfort monitoring subsystem such as user discomfort detector 55. Detector 55 may be configured to assess the user's current comfort level. Since it may take some time for a user to experience or notice discomfort such as motion sickness, detector 55 can collect measurements or data associated with the user over a period of time to *predict* whether the user will experience discomfort. For instance, detector 55 can collect and analyze data gathered over a period of 10-20 minutes, at least 5 minutes, at least 10 minutes, 5-10 minutes, or other suitable duration to predict whether a user is likely to experience some level of visual discomfort. Detector 55 can therefore sometimes be referred to as a user discomfort prediction subsystem.

Whether or not visual discomfort might arise might also be dependent or personalized to each user. For example, a first user might be more prone to experiencing visual discomfort, whereas a second user might be less prone to experiencing visual discomfort given the same use case. Detector 55 can optionally maintain a user discomfort model that is personalized to each user and can use current and historical telemetry of userrelated data to adjust a baseline user discomfort model.

In one embodiment, user discomfort detector 55 may employ gaze tracker 44 to monitor a user's gaze to determine whether the user might be experiencing discomfort. For example, if the user is constantly looking away from the primary content, is closing his or her eyes for an extended period of time, is blinking more than usual, or is acting in other ways indicating that the user is experiencing eye strain (as detected using gaze tracker 44), discomfort detector 55 can make a prediction that the user is experiencing an increasing level of discomfort. In another embodiment, user discomfort detector 55 may employ a breathing tracker to monitor a user's breathing rate or pattern. For example, if the user is breathing faster or if the cadence of the user's breath is becoming more irregular (as detected by the breath tracker), discomfort detector 55 can make a prediction that the user is experience an increasing level of discomfort. If desired, user discomfort detector 55 can employ other sensors to monitor visual or motion cues associated with the user (e.g., to measure a user's body motion, pupil motion, head motion, balance, facial expression, heart rate, perspiration, or other biometric data).

The examples above in which user discomfort detector 55 records and monitors measurements directly related to the user are merely illustrative. If desired, user discomfort detector (predictor) 55 can additionally or alternatively monitor parameters associated with one or more subsystems within device 10 as a proxy for determining or predicting whether a user is likely to experience visual discomfort. As an example, detector 55 can predict that the user is likely to experience discomfort when detecting that one or more frames being displayed is being dropped, when detecting that repeated frames are being displayed, or when detecting that the display frame rate is unstable. These display anomalies can occur when one or more subsystems in the display pipeline and/or the graphics rendering pipeline has crashed or is otherwise experiencing some type of slowdown. As another example, detector 55 can predict that the user is likely to experience visual discomfort when detecting some level of movement (or optical flow) in the periphery of the user's current field of view. As another example, detector 55 can predict that the user is likely to experience visual discomfort when detecting that latencies associated with cameras 38, ambient light sensors 40, face and body tracker 42, hands tracker 44, gaze tracker 46, and/or other sensors 16 (see FIG. 1) are greater than predetermined threshold levels and could thus potentially degrade the performance of other associated subsystems such as causing lag in the displayed content, lag in point of view correction, lag in foveation, etc.

Device 10 may also be provided with a localization block such as localization subsystem 53. Localization subsystem 53 can be configured to receive depth/distance information from one or more depth sensor(s), position and motion data from an inertial measurement unit, and optionally images from one or more external-facing cameras 38. Subsystem 53 can include visual-inertial odometry (VIO) components that combine the visual information from cameras 38, the data from the inertial measurement unit, and optionally the depth information to estimate the *motion* of device 10. Additionally or alternatively, subsystem 54 can include simultaneous localization and mapping (SLAM) components that combine the visual information from cameras 38, the data from the inertial measurement unit, and the depth information to construct a 2D or 3D map of a physical environment while simultaneously tracking the location and/or orientation of device 10 within that environment. Configured in this way, subsystem 53 (sometimes referred to as a VIO/SLAM block or a motion and location determination subsystem) can be configured to output motion information, location information, pose/orientation information, and other position-related information associated with device 10 within a physical environment.

Device 10 may also include a power controlling subsystem such as power controller block 51. Power controller 51 can be configured to detect when the state of charge of battery 26 is low or below a threshold level, when a temperature of battery 26 is low or below a temperature threshold, and/or other conditions where brown out might occur. "Brown out" can refer to a phenomenon that occurs in a battery-powered device where the voltage supplied by the battery decreases, temporarily or unintentionally, to a level that may not be sufficient for proper functionality of that device. Brown out events can lead to issues such as reduced performance, erratic behavior, or even unexpected shutdowns when the battery level becomes critically low. Power controller 51 can take suitable preventative or remedial actions to avoid such brown out occurrences.

As shown in FIG. 2, device 10 can include many subsystems each tasked with providing disparate or related functions. Conventionally, the various subsystems within an electronic device can be managed using *separate* closed loop mechanisms. For instance, performance and power tradeoffs associated with a voice-controlled automated assistant block might be managed using a first closed loop mechanism, whereas performance and power tradeoffs associated with a graphics rendering block might be managed using a second closed loop mechanism that is independent of the first closed loop mechanism. Using multiple individual closed loop mechanisms within an electronic device with many subsystems can be inefficient.

In accordance with an embodiment, electronic device 10 can be provided with a centralized user experience manager such as centralized user experience manager 30 that maintains a centralized policy for balancing performance and power settings for all of the various subsystems within device 10 simultaneously while optimizing for user experience for a particular user context (use case). In other words, centralized user experience manager 30 can detect the current use case and identify a corresponding set of restrictions for any related or unrelated subsystems to optimize for the best user experience for the current user context given the limited available (compute) resources on device 10. Using a centralized user experience manager such as user experience manager 30 to manage power consumption and thermal conditions across a wide range of software and hardware subsystems can provide a more efficient way of balancing performance and power consumption while optimizing the user experience for a particular user context. The subsystems being monitored and/or controlled by centralized user experience manager 30 can include components within input-output devices 24.

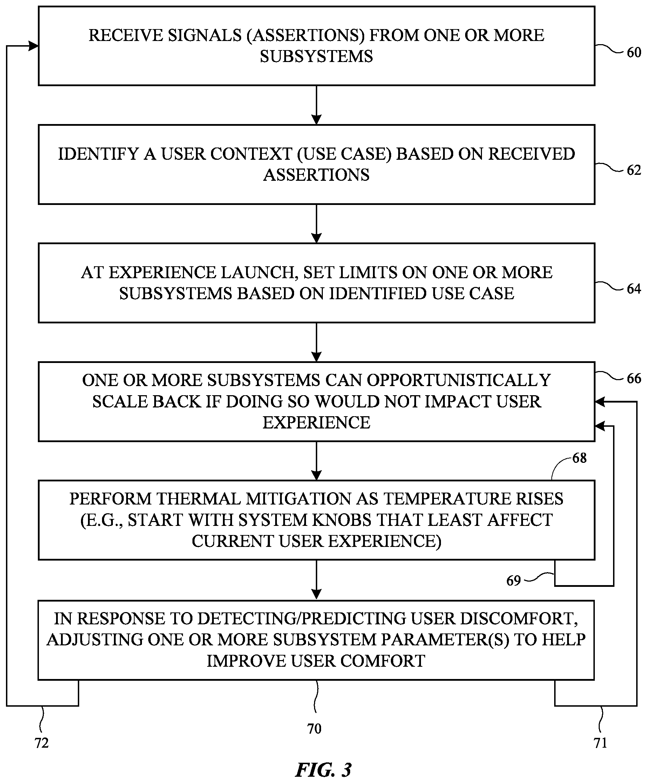

FIG. 3 is a flow chart of illustrative steps showing how centralized user experience manager 30 can be operated. During the operations of block 60, centralized user experience manager 30 can receive signals (sometimes referred to as assertions or requests) from one or more subsystems. During the operations of block 62, centralized user experience manager 30 can identify a particular use case (sometimes referred to or defined herein as a "user context" or "user mode") based on the received assertions.

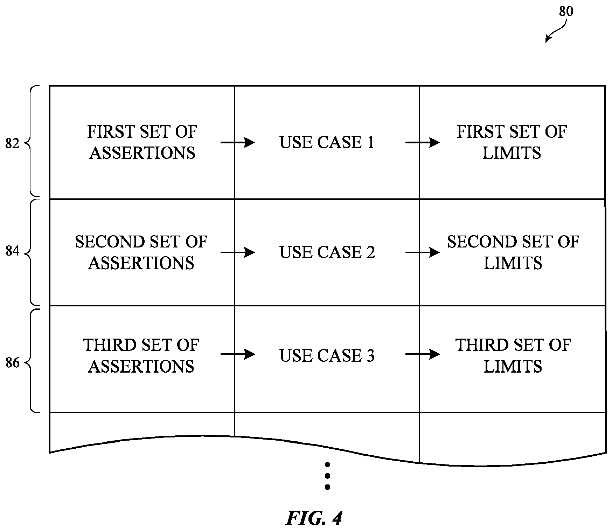

FIG. 4 shows a table 80 mapping different subsystem assertions to corresponding use cases (or profiles). As shown in row 82 of table 80, a first set of assertions can be indicative of a first user context (e.g., a first extended reality mode). In row 84, a second set of assertions may be indicative of a second user context (e.g., a second extended reality mode) that is different than the first user context. In row 86, a third set of assertions may be indicative of a third user context (e.g., a third extended reality mode) that is different than the first and second user contexts. In general, device 10 can be operated to support more than three user contexts, three to ten user contexts, more than ten user contexts, or any number of extended reality (XR) modes.

As an example, centralized user experience manager 30 receiving an assertion from media player subsystem 56 when subsystem 56 launches a media player or receiving an assertion from media streaming subsystem 57 when a user actively launches a media streaming application may be indicative that the user will be operating device 10 in an *immersive media mode.* During the immersive media mode, the user may be presented with movie (cinematic) content, gaming content, or other immersive XR content. These examples in which device 10 can operate in a mode that offers the user an immersive experience for consuming media content is merely illustrative. More generally, device 10 can be operated in an *immersive mode* in which a user can launch any application that provides an immersive experience for the user to consume other types of content.

As another example, centralized user experience manager 30 receiving an assertion from multiuser communication session subsystem 58 when a user actively launches a multiuser communication session call may be indicative that the user will be operating device 10 in a *multiuser communication session mode.* As another example, centralized user experience manager 30 receiving an assertion from camera(s) subsystem 38 when a user actively launches a camera application and presses a record button may be indicative that the user will be operating device 10 in a *spatial capture mode.* The spatial capture mode may employ a recording subsystem that records the content that is currently being displayed by device 10, where the recording can be later played back on device 10 or can be viewable on another device. The immersive (media) mode, the multiuser communication session mode, and the spatial capture mode described above are merely illustrative. Device 10 can be operated under any suitable number of extended reality modes (e.g., a travel mode when sensor data indicates that the user's physical location is moving). These examples in which centralized user experience manager 30 identifies a particular user context based on received assertions are merely illustrative. In other embodiments, centralized user experience manager 30 can also leverage existing mechanisms on device 10 that monitor the behavior of the various subsystems on device 10 without any subsystem(s) explicitly outputting an assertion to manager 30.

Referring back to block 64 of FIG. 3, centralized user experience manager 30 can, at the launch of a certain user experience or application, proactively set limits or restrictions on one or more subsystems based on the user context identified from the operations of block 62. As shown in FIG. 4, different user contexts (use cases) can have different corresponding subsystem constraints. The first user context can proactively impose a first corresponding set of limits (restrictions) on a certain group of subsystems. The second user context can proactively impose a second corresponding set of limits (different than the first set of limits) on a certain group of subsystems. The third user context can proactively impose a third corresponding set of limits (different than the first and second set of limits) on a certain group of subsystems, and so on.

As an example, upon launch of the immersive media mode or other immersive mode, user experience manager 30 can proactively limit the performance and/or frequency of scene understanding subsystem 36, can disable mesh shadows and depth mitigation functions and/or can limit a temporal anti-aliasing (TAA) coverage provided by rendering subsystem 32, can limit the resolution of a passthrough feed obtained by camera(s) 38, can limit the frequency of the environment sensors (e.g., ambient light sensor 40, audio sensor 48, temperature sensor 52, or other sensors 16), can limit the performance and/or frequency of hands tracking subsystem 44, can disable other image correction functions such as point of view correction (PoVC), can switch between different reduced power modes (e.g., to switch from operating using a first low power algorithm to using a second low power algorithm), and/or can set other system constraints without degrading the user experience of the immersive (media) mode. By limiting the performance of subsystems that are less critical to the user experience of the identified mode, the user experience manager can proactively allocate limited system resources for the identified mode.

As another example, upon launch of the multiuser communication session mode, user experience manager 30 can proactively limit the performance of voice-controlled automated assistant 59 (e.g., by limiting the automatic speech recognition, text-to-speech, and dictation quality of subsystem 59), can adjust a phase audio rendering quality, and/or can set other system constraints without degrading the user experience of the multiuser communication session mode.

As another example, upon launch of the spatial capture mode, user experience manager 30 can proactively disable mesh shadows and depth mitigation functions and/or can limit a temporal anti-aliasing (TAA) coverage provided by rendering subsystem 32, can render applications at a lower framerate, can limit the performance and/or frequency of hands tracking subsystem 44, can switch from one reduced power mode to another reduced power mode (e.g. to switch from a first low power mode to a second low power mode), and/or can set other system constraints without degrading the user experience of the spatial capture mode. A reduced or low power mode can refer to or be defined as a mode of operation during which device 10 is configured to prioritize power savings over performance and thus relies on one or more power savings algorithm(s) to help reduced power consumption relative to normal operations. These various tradeoffs established at the launch of any given user experience or context can represent an initial starting point which can evolve over time as system condition changes.

Referring back to block 66 of FIG. 3, one or more subsystems can opportunistically scale back if doing so would not impact the current user experience. Each subsystem in device 10 can operate dynamically and is expected to take appropriate action to minimize system workloads. During the operations of block 66, centralized user experience manager 30 can apply additional restrictions that further limit the dynamic behavior of one or more subsystems depending on the current user context.

As an example, centralized user experience manager 30 can lower the maximum frame rate of graphics rendering subsystem 32 from 90 fps (frames per second) to 45 fps to other lower limits. Such rendering limits can be optionally imposed upon detecting that the rendered content has not changed for some period of time. As another example, centralized user experience manager 30 can lower the maximum hands tracking frequency from 30 Hz to less than 20 Hz, to less than 10 Hz, or to 0 Hz. Such hands tracking frequency limit can be optionally imposed upon detecting that no hands are being detected. As another example, centralized user experience manager 30 can limit the algorithm mode of scene understanding subsystem 36. As another example, background applications or applications outside a user's field of view can be opportunistically frozen or idled. In some embodiments, centralized user experience manager 30 can further extend this constraint to freeze applications that are within the user's field of view if needed. If desired, centralized user experience manager 30 can also set rendering frequency limits on background applications or on active applications with which the user is currently engaged.

As another example, centralized user experience manager 30 can opportunistically raise the fan speed of fan 50 upon detecting using audio sensor 48 that the ambient noise level is high (since the user likely would not hear the increased fan noise anyways due to the high ambient noise). As another example, centralized user experience manager 30 can proactively raise the fan speed of fan 50 upon detecting that the current user context is the immersive media mode or other immersive mode (since the user likely would not hear the increased fan noise anyways due to the loud sound levels played during a movie or a game). Conversely, centralized user experience manager 30 can proactively *lower* the fan speed of fan 50 upon detecting that the current user context is a meditation mode to allow the user to concentrate and relax during a mediation session. Control of the fan speed by the centralized user experience manager 30 based on the current user context can optionally override the control of the fan speed based on the current internal temperature of device 10. For example, during the immersive media mode, manager 30 might proactively raise the fan speed even though the current internal temperature of device 10 is still relatively low.

During the operations of block 68, centralized user experience manager 30 can perform thermal mitigation techniques as the temperature of one or more internal components rises within device 10. An internal temperature or the temperature of individual subsystems can be measured using one or more temperature sensor(s) 52 (see FIG. 2). To perform thermal mitigation operations (i.e., to help reduce the internal temperature of device 10), centralized user experience manager 30 can sequentially adjust thermal mitigation knobs that are ordered in terms of their effect on user experience. The example of block 68 where thermal mitigation operations are performed when temperature rises is illustrative. If desired, power mitigation operations can additionally or alternatively be performed during block 68 when the power consumption at device 10 is of concern. Power mitigation operations can include reducing the frequency of one or more subsystems within device 10, selective deactivating one or more subsystems within device 10, limiting resource usage of one or more subsystems within device 10, and/or otherwise imposing constraints or restrictions on one or more subsystems within device 10. When performing such power mitigation operations, centralized user experience manager 30 can sequentially adjust power mitigation knobs that are ordered in terms of their effect on the user experience (e.g., power mitigation knobs that least affect the current user experience can first be adjusted). The examples here in which thermal impact or power impact is considered by the user experience manager 30 are illustrative. As other examples, user experience manager 30 can prioritize for performance, for the current user experiences, for maintaining connectivity with a remote data source, or for other considerations when resources are limited on device 10.

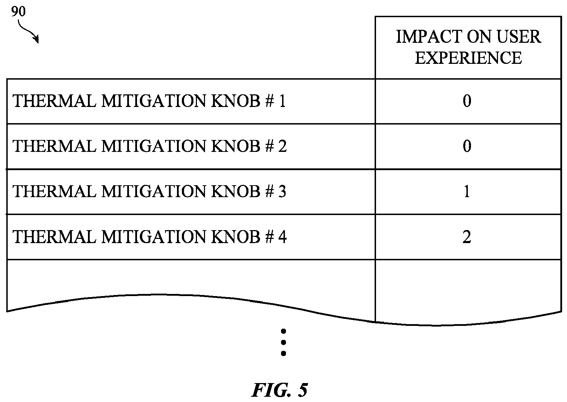

FIG. 5 shows a table 90 of an ordered list of thermal mitigation knobs. As shown by FIG. 5, a first thermal mitigation knob with minimal impact on the overall user experience (see user impact level of "0") can first be employed. If the first thermal mitigation knob does not sufficiently lower the internal temperature of device 10, a second thermal mitigation knob with minimal impact on the overall user experience can then be employed. If the second thermal mitigation knob does not sufficiently lower the internal temperature of device 10, a third thermal mitigation knob with some impact on the overall user experience (see user impact level of " 1") can then be employed. If the third thermal mitigation knob does not sufficiently lower the internal temperature of device 10, a fourth thermal mitigation knob with some impact on the overall user experience (see user impact level of "2") can then be employed. In general, table 90 may include at least five thermal mitigation knobs, five to ten thermal mitigation knobs, 10-20 thermal mitigation knobs, or more than 20 thermal mitigation knobs ordered in terms of increasing impact on the user experience, with knobs at the beginning of the list not producing visible impact on the overall user experience and with knobs at the bottom of the list producing visible degradation on the overall user experience.

For example, a first thermal mitigation knob can be to limit or restrict the frame rate of the graphics rendering subsystem 32. A second thermal mitigation knob listed after the first thermal mitigation knob can be to limit the performance of the voice-controlled automated assistant 59 (e.g., to limit the automatic speech recognition, text-to-speech, and dictation quality of subsystem 59). A third thermal mitigation knob after the second thermal mitigation knob can be to limit the performance and frequency of the scene understanding subsystem 36. A fourth thermal mitigation knob following the third thermal mitigation knob can be to limit the streaming tier or resolution of media streaming subsystem 57. A fifth thermal mitigation knob following the fourth thermal mitigation knob can be to adjust the phase audio rendering quality of an audio rendering subsystem within device 10. A sixth thermal mitigation knob following the fifth thermal mitigation knob can be to limit the face and body tracking frequency of subsystem 42.

A seventh thermal mitigation knob following the sixth thermal mitigation knob can be to disable mesh shadows and depth mitigation functions provided by rendering subsystem 32. An eighth thermal mitigation knob following the seventh thermal mitigation knob can be to limit the number of foreground applications presented to the user. A ninth thermal mitigation knob following the eighth thermal mitigation knob can be to limit a temporal anti-aliasing (TAA) coverage provided by rendering subsystem 32. A tenth thermal mitigation knob following the ninth thermal mitigation knob can be to limit the frequency and/or resolution of one or more environmental sensors (e.g., ambient light sensor 40, audio sensor 48, temperature sensor 52, or other sensors 16) within device 10. An eleventh thermal mitigation knob following the tenth thermal mitigation knob can be to limit the foveation size or tiers of dynamic foveation subsystem 34. A twelfth thermal mitigation knob following the eleventh thermal mitigation knob can be to limit the performance or frequency of the hands tracking subsystem 44. A thirteenth thermal mitigation knob following the twelfth thermal mitigation knob can be to limit the performance or frequency of the gaze tracking subsystem 46. Yet another thermal mitigation knob can include switching between different power modes (e.g., to switch from a first low power mode to a second low power mode).

The above thermal mitigation schemes are merely illustrative and do not represent an exhaustive list. The order of these thermal mitigation knobs can optionally be adjusted based on the current user context. The list and order of thermal mitigation knobs can also be tailored based on the current user context (e.g., different use cases can each rely on a different list of thermal mitigation knobs that least impact that particular use case). As an example, for an immersive mode or user context, limiting the performance or frequency of the hands tracking subsystem 44 can be moved higher up in the ordered list of thermal mitigation knobs (i.e., such limitation can be activated at a lower temperature threshold) since tracking the user's hand might not be as critical during the immersive mode. As another example, for the multiuser communication session mode or user context, adjusting the phase audio rending quality can be moved higher up in the ordered list of thermal mitigation knobs. As another example, for the spatial capture mode or user context, disabling the mesh shadows and depth mitigation functions provided by rendering subsystem 32 can be moved higher up in the ordered list of thermal mitigation knobs since such functions may be less important during the capture mode. The operations of block 66 can occur in tandem or in parallel with the thermal mitigation operations of block 68, as indicated by path 69.

During the operations of block 70, centralized user experience manager 30 can perform user discomfort mitigation operations in response to detecting or predicting that the user will be experiencing visual discomfort (e.g., using discomfort monitoring subsystem 55 of FIG. 3). As described above in connection with FIG. 3, the user discomfort detector can make such determination or prediction by directly gathering data associated with the user (e.g., such as by monitoring the user's gaze, breathing, body motion, head motion, balance, facial expression, heart rate, perspiration, or other biometric data) and by indirectly monitor system parameters (e.g., such as by detecting dropped frames, increased latencies, heightened movement along the peripheral of the user's field of view, etc.).

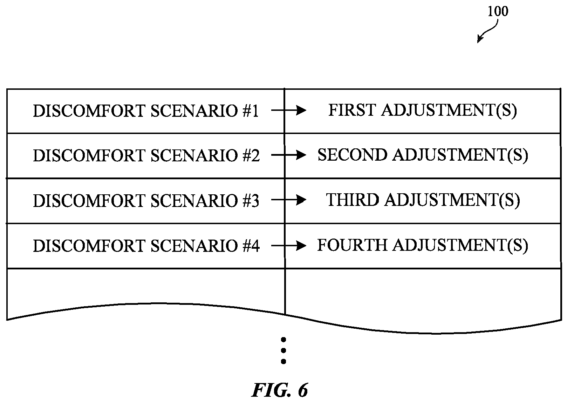

In response to detecting that the user might be or will be experience visual discomfort, device 10 can be configured to take suitable action to prioritize or to optimize for visual comfort. FIG. 6 shows a table 100 showing different adjustments that can be made depending on the type or category of user discomfort scenario that is currently detected by subsystem 55. As shown in FIG. 6, centralized user experience manager 30 can be configured to make first subsystem adjustment(s) in response to detecting a first user discomfort scenario, to make second subsystem adjustment(s) in response to detecting a second user discomfort scenario different than the first user discomfort scenario, to make third subsystem adjustment(s) in response to detecting a third user discomfort scenario different than the first and second user discomfort scenarios, and so on.

For example, in response to detecting unstable frame rates, centralized user experience manager 30 may prioritize or reserve computing power to the rendering and display pipelines to help improve user comfort. As another example, in response to detecting movement or optical flow in the periphery of a user's field of view, centralized user experience manager 30 may reduce field of view or reduce the foveation size to help improve user comfort. As another example, in response to detecting increased latency levels associated with the graphics rendering pipeline, centralized user experience manager 30 may reduce the graphics rendering frame rate or simply fall back on only displaying the passthrough video feed without overlaying any rendered XR content. As another example, in response to detecting that the user is closing his or her eyes for an extended period of time, is blinking more than usual, or is acting in other ways indicating that the user is experiencing eye strain, centralized user experience manager 30 may limit a frequency, limit a resolution, and/or disable a function of at least one of the plurality of subsystems in device 10 help improve user comfort.

Referring back to FIG. 3, the operations of block 66 can occur in tandem or in parallel with the user discomfort mitigation operations of block 70, as indicated by path 71. If desired, the operations of block 68 can also occur in tandem or in parallel with the user discomfort mitigation operations of block 70. Processing can loop back to block 60 when the centralized user experience manager 30 receives new assertions indicating that device 10 is switching from one use case to a different use case (e.g., from one extended reality mode to another extended reality mode), as indicated by path 72.

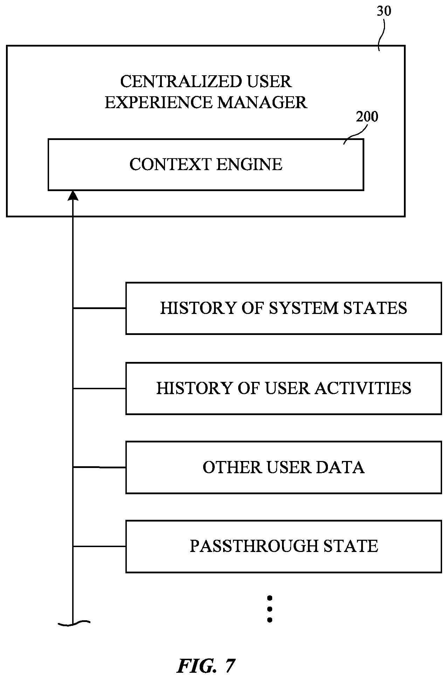

FIG. 7 is a diagram showing how centralized user experience manager 30 can include a context engine such as context engine 200. Context engine 200 can be configured to estimate or predict a user context (e.g., to predict what the user will be doing or to predict a future user activity). Prediction of user context can help centralized user experience manager 30 make system-level adjustments that are optimized for power conservation (e.g., for applications where all-day battery use is critical), for thermal mitigation, for reducing user discomfort, or for optimizing performance to ensure a full-feature high-quality user experience. Context engine 200 can also be used to estimate or identify a current user context. Context engine 200 is therefore sometimes referred to herein as a user context estimation/prediction subsystem. Predicting an upcoming (future) user context and making system-level adjustments in anticipation of such future user activity can allow device 10 to proactively or preemptively switch to a low power mode if needed to save power or to the high power mode if thermals and battery life is not of concern.

Such estimation and prediction of user context at engine 200 may be based on signal assertions from one or more subsystems (see, e.g., blocks 60 and 62 in FIG. 3 and also FIG. 4), a history of system states, a history of user activities, other user data, a passthrough state, some combination of these factors, and/or other information. The history of system states can include historical data of monitored states of the various hardware/software subsystems in device 10. The history of user activities can include information about which applications have been run on device 10, when those applications are being run, and for how long. The history of user activities can optionally include location information indicating the location of device 10 at certain times of the day and/or the location of device 10 when certain applications are launched. The other user data may include information gleaned from the user's calendar or reminders, which might indicate that the user is out-of-office or is at a certain location that is indicative or deviating from their usual routine.

The passthrough state might indicate whether a passthrough video feed is currently being displayed to the user. Such passthrough state might be more relevant for device 10 of the type that includes an opaque display that blocks ambient light in the physical scene from directly reaching a user's eyes when the user operates such device 10. If the passthrough state indicates that the passthrough video feed is currently visible to the user, then any subsystem relevant to the processing of the passthrough feed should be taken into consideration by the centralized user experience manager 30 when making system-level adjustments. If the passthrough states indicates that the passthrough video feed is currently *not* visible to the user, then any subsystem relevant to the processing of the passthrough feed might be given lower priority by the centralized user experience manager 30 when making system-level adjustments.

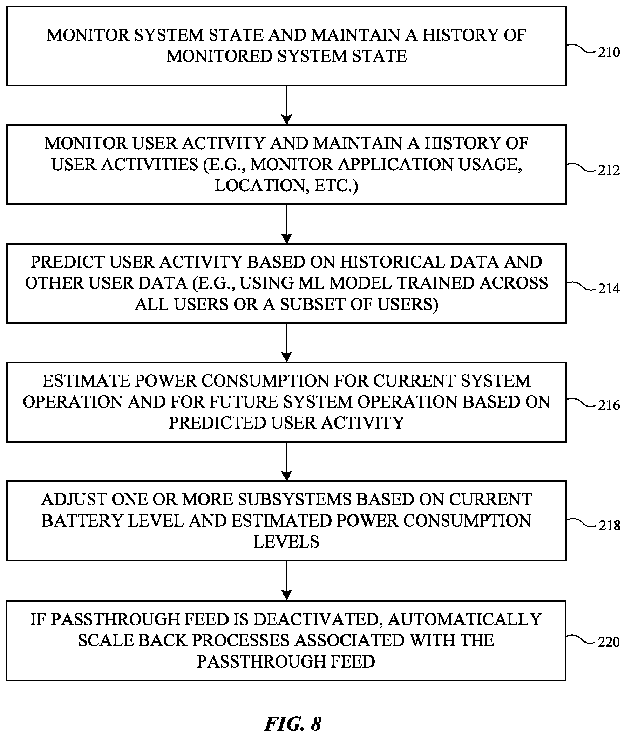

FIG. 8 is a flow chart of illustrative steps for operating context engine 200 of the type described in connection with FIG. 7. During the operations of block 210, context engine 200 may monitor system state (e.g., to monitor the states and/or assertions from the various subsystems within device 10) and maintain a history of monitored system states. The history of monitored system states can include information about when particular hardware/software subsystems in device 10 are active or idle.

During the operations of block 212, context engine 200 may monitor user activity and maintain a history of user activities. For example, context engine 200 might monitor application usage (e.g., when certain applications are active or idle), the location of device 10 throughout the day, the location of device 10 when certain application are activated/launched, and/or other information relating to the user or device 10 when certain activities occur. Although the operations of block 212 are shown as occurring after block 210, the operations of block 212 can optionally occur in parallel (simultaneously) with or before the operations of block 210.

During the operations of block 214, context engine 200 may predict a future user activity based on the historical data (e.g., based on the history of monitored system states obtained during block 210 and/or based on the history of user activities obtain during block 212) and/or based on other user data. The other user data can include information gleaned from the user's calendar (sometimes referred to as calendar information) or reminders, which might indicate when the user will be traveling and so will be more likely to run a map application, a GPS (Global Positioning System) application, or other navigation application (as an example). If desired, the prediction performed by context engine 200 may be based on a machine learning (ML) model that is trained on historical data (e.g., historical system state and user activity information) associated with a broad base of users or with only a subset of all users. If desired, context engine 200 can also predict when the user is likely to charge battery 26 of device 10. For example, historical data might indicate that the user tends to plug in device 10 for charging at around 8AM on the weekdays and at around 10PM every night throughout the week.

During the operations of block 216, context engine 200 may estimate the power consumption for the current system operation (e.g., to estimate the power consumption of the various subsystems within device 10 in running the current user context or activity) and may estimate the power consumption for an upcoming (future) system operation (e.g., to estimate the power consumption of the various subsystems within device 10 to run the predicted user context or activity). For example, if the predicted user activity includes running a GPS navigation application, then context engine 200 can estimate the power usage of one or more subsystems involved in running the GPS navigation application.

During the operations of block 218, centralized user experience manager 30 can adjust one or more subsystems based on the current battery level (state of charge of battery 26 in FIG. 1) and the estimated power consumption levels obtained from block 216 using context engine 200. In some embodiments, centralized user experience manager 30 can make system-level adjustments optimized to conserve the remaining battery charge so that the user does not have to charge battery 26 throughout the day. As an example, centralized user experience manager 30 might adjust certain subsystem knobs that isn't necessarily optimal for the current user context to help reduce power consumption (e.g., manager 30 may make subsystem adjustments based on the estimated power consumption levels in a way that would degrade the current user context and/or the predicted user context). In other scenarios, centralized user experience manager 30 might adjust certain subsystem knobs that would increase power consumption if the current battery level has been determined to be sufficient for the predicted usage activity for the rest of the day.

Adjustment of subsystem knobs can optionally be based on the prediction of when the user is likely to charge (or plug in) device 10 as determined by context engine 200 during block 214. For example, if context engine 200 predicts that the user will be charging device 10 relatively soon (e.g., in less than one hour, less than two hours, less three hours, etc.) and that the currently battery level is sufficiently high to support the predicted user activity, then centralized user experience manager 30 need not be overly concerned about conserving power. On the other hand, if context engine 200 predicts that the user will *not* be charging device 10 for an extended period of time and the current battery level is limited, then centralized user experience manager 30 might adjust certain knobs to proactively reduce power consumption.

During the operations of block 220, centralized user experience manager 30 can optionally perform system adjustments based on whether the passthrough video feed is currently active (e.g., whether the passthrough feed is currently visible to the user). If the passthrough video feed is deactivated (e.g., the passthrough feed is *not* visible to the user), then centralized user experience manager 30 can automatically scale down (constrain or throttle down) subsystems associated with the processing of the passthrough feed. For example, the scene understanding block 36 (FIG. 2) can be scaled back since block 36 does not need to calculate the geometry of the scene as often. The scene understanding block 36 can be reduced to a minimum operating state that is sufficient to detect proximity of an external object, the detection of which would trigger the passthrough feed to be activated and made visible to the user. As another example, if the passthrough video feed is deactivated, then a point-of-view correction (POVC) subsystem in device 10 configured to correct the point-of-view of images captured by the passthrough cameras can also be scaled back or deactivated. As another example, if the passthrough video feed is deactivated, then a subsystem in device 10 responsible for modeling the environment or scene lighting can also be scaled back or deactivated. If, however, the passthrough video feed is activated (e.g., the passthrough feed is being displayed to the user), then centralized user experience manager 30 may adopt a more considered approach to maintain the quality of the passthrough feed while keeping the power consumption of the passthrough-processing subsystems at acceptable levels. For example, the scene understanding block 36, the POVC subsystem, and the scene light modeling subsystem might be operated at a *higher* frame rate when the passthrough state is active relative to when the passthrough state is inactive.

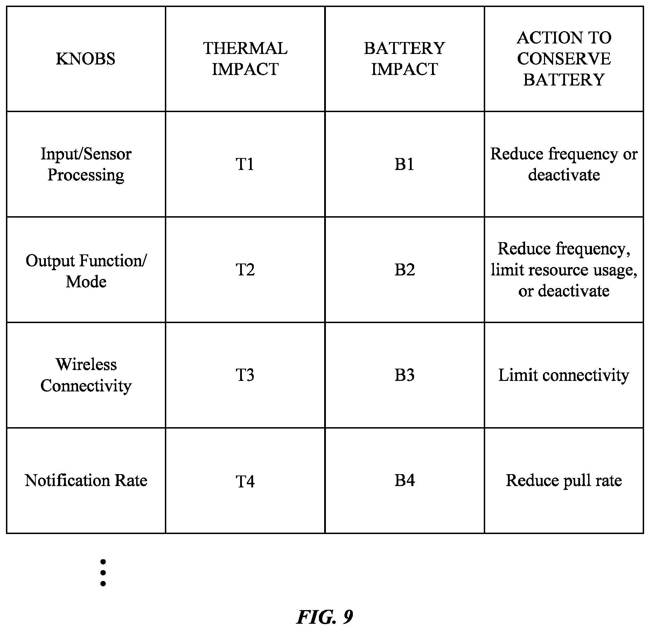

FIG. 9 is a table of illustrative subsystem control knobs that can be adjusted by centralized user experience manager 30 based on prediction by context engine 200 to conserve battery usage in electronic device 10. A first category of knobs might include knobs related to the processing of user input or sensors that monitor user input and/or other information from the surrounding environment. The first category of knobs can have a first set of corresponding thermal impact levels T1 and a first set of corresponding battery impact levels B 1. In accordance with an embodiment associated with such input sensor processing, a gaze tracking control knob associated with gaze tracking subsystem 46 can optionally be adjusted by centralized user experience manager 30 or context engine 200 based on the current user context (activity) and/or based on the predicted user context (activity). The gaze tracking control knob may determine the rate at which gaze tracking is being performing, which can affect the latency with which the user's point of gaze is being tracked. The gaze tracking function provided by gaze tracking subsystem 46 may have a corresponding medium thermal impact level on the overall thermals of device 10 and a corresponding medium battery impact level on the battery usage of device 10. Such thermal and battery impact levels are exemplary. To help conserve battery life for device 10, the frame rate (or frequency) at which gaze tracking is being performed by the gaze tracking subsystem can optionally be reduced, limited, scaled back, or otherwise constrained. For example, the gaze tracking frame rate can be reduced from a nominal frame rate of 30 fps (frames per second) to less than 20 fps, less than 10 fps, or less than 5 fps.

In accordance with another embodiment associated with input sensor processing, a gaze-to-wake control knob associated with gaze tracking subsystem 46 can optionally be adjusted by centralized user experience manager 30 or context engine 200 based on the current user context (activity) and/or based on the predicted user context (activity). The gaze-to-wake control knob may determine the rate at which the user's gaze location is tracked to wake up device 10 from an idle mode. For example, device 10 may wake up from an idle state in response to the gaze tracker determining that the user's gaze location (or point of gaze) is aligned with a predetermined location in the user's field of view. This gaze-to-wake function may have a corresponding low thermal impact level on the overall thermals of device 10 and a corresponding high battery impact level on the battery usage of device 10. Such thermal and battery impact levels are exemplary. To help conserve battery life for device 10, the frequency (or frame rate) at which the gaze-to-wake function is being performed can optionally be reduced, limited, scaled back, constrained, or deactivated. For example, the gaze-to-wake frequency can be reduced from a nominal frequency of 10 Hz to less than 5 Hz, less than 4 Hz, less than 3 Hz, less than 2 Hz, or less than 1 Hz.

If desired, a Siri-to-wake control knob can similarly be adjusted to conserve battery life. Unlike the gaze-to-wake feature that wakes up device 10 based on gaze data, the Siri-to-wake feature wakes up device 10 from the idle mode in response to detecting a voice command such as "Hey Siri." For instance, the frequency (or frame rate) at which the Siri-to-wake function is being performed can optionally be reduced, limited, scaled back, constrained, or deactivated. The gaze-to-wake and the Siri-to-wake features can be supported using a subsystem configured to detect a user input (e.g., gaze or voice command) for waking up device 10.

In accordance with another embodiment associated with input sensing, a hands tracking control knob associated with hands tracking subsystem 44 can optionally be adjusted by centralized user experience manager 30 or context engine 200 based on the current user context (activity) and/or based on the predicted user context (activity). The hands tracking control knob may determine the rate at which the user's hands are being tracked by hands tracker 44. To help conserve battery life for device 10, the frequency (or frame rate) at which the hands tracking function is being performed can optionally be reduced, limited, scaled back, constrained, or deactivated. As another example, consider a scenario in which device 10 is being operated by a hearing-impaired user who might communicate using American Sign Language (ASL) in certain scenarios. The hearing-impaired user can input an accessibility setting so that centralized user experience manager 30 is made aware of such condition. Hands tracking subsystem 44 in device 10 can be used to detect the American Sign Language or other sign language. Depending on the current or predicted user context, centralized user experience manager 30 can selectively adjust the hands tracking subsystem 44 to optimize for the current use case or to save power. For instance, if the hearing-impaired user is running a productivity application where the primary user interaction is with a keyboard, then centralized user experience manager 30 may direct hands tracking subsystem 44 to run at a nominal/standard frame rate (or frequency). If the hearing-impaired user is in a multiuser communication session and is communicating with other users in the session via American Sign Language (ASL), centralized user experience manager 30 may scale up the hands tracking subsystem 44 (e.g., by increasing the frame rate of hands tracker 44) to assist with decoding the ASL based on knowledge of the accessibility setting and the current user context. As another example, consider a scenario in which device 10 is being operated by a visually-impaired user. In such scenario, the scene understanding subsystem 36 and/or other computer vision related subsystems (algorithms) can be scaled up to assist the visualimpaired user with navigating or interacting with the environment. If desired, device 10 may be operated in other accessibility modes depending on the currently identified user context (activity) and/or the predicted user context (activity).

In accordance with another embodiment associated with input sensing, a knob for controlling background outward-facing camera (OFC) vision can optionally be adjusted by centralized user experience manager 30 based on the current user context (activity) and/or based on the predicted user context (activity). The background OFC vision capability/function can leverage scene understanding subsystem 36 (FIG. 2) to analyze the scene, to determine a current usage context, and/or to predict a future usage context. Scene understanding block 36 can be a software and/or hardware component configured to interpret and comprehend the received content. Scene understanding block 36 can be a machine learning based component such as a neural network that has been trained on a large database of real-world or synthesized images. As an example, scene understanding block 36 can be configured to perform semantic segmentation (e.g., to divide an image into distinct regions or segments, where each segment corresponds to a particular object or class of objects). Semantic segmentation can be used to distinguish between walls, floors, ceilings, table or countertops, display panels, projection screens, touch screens, and/or other planar or curved surfaces. Semantic segmentation can, via feature extraction techniques, assign a label to every pixel in an image to provide a detailed understanding of the scene. Scene understanding block 36 can be configured to detect and track various types of objects in an image (e.g., to identify and track objects in the real-world environment such as to recognize specific objects, surfaces, or even people), to detect surfaces (e.g., to determine the characteristic and layout of surfaces such as walls, tables, display panels, and other surfaces), to detect the location of the user and objects in an image within the user's environment (e.g., to estimate the distance of objects or to obtain depth information), to detect whether a moving object is a car or a living thing, etc.), and/or to maintain a representation of the user's environment over time. Extracting meaningful information from the surrounding environment using scene understanding block 36 can allow device 10 to accurately overlay (display) virtual objects on top of the real-world objects in a contextually relevant manner.

As an example, the background OFC vision feature can detect one or more screens, displays, and/or other planar surfaces that actively emit light in a scene. As another example, the background OFC vision feature can detect one or more faces in a scene (e.g., to detect whether the user of device 10 is having a conversion or is otherwise interacting with another person in the physical environment). As another example, the background OFC vision feature can detect one or more smart home devices in the scene that can be paired with and/or controlled by device 10 (e.g., the background OFC vision feature can detect one or more HomeKit-enabled devices that are compatible with the HomeKit or Apple Home software framework developed by Apple Inc.).
Adjusting the background OFC vision capability in this way may have a corresponding medium thermal impact level on the overall thermals of device 10 and a corresponding high battery impact level on the overall battery usage of device 10. Such thermal and battery impact levels are exemplary. To help conserve battery life for device 10, the camera rate at which the background OFC vision uses to capture and process scene images can be reduced (e.g., by constraining or deactivating the scene understanding subsystem). For example, the number of frames being captured and processed by the background OFC vision feature can be reduced from a nominal number of over 40000 frames/day to less than 20000 frames/day, to less than 10000 frames/day, or to less than 5000 frames/day.

In accordance with another embodiment associated with input sensing, a knob for controlling a localization algorithm on device 10 can optionally be adjusted by centralized user experience manager 30 or context engine 200 based on the current user context (activity) and/or based on the predicted user context (activity). For example, the localization algorithm can leverage one or more sensors 16 (FIG. 1) to perform room-level localization using visual odometry, visual inertial odometry, and/or other simultaneous localization and mapping (SLAM) techniques. The localization algorithm may run on localization subsystem 53 in device 10 configured to perform room-level localization. "Room-level" localization, when activated, is a feature that enables device 10 determine what room the user is currently situated (e.g., to determine whether the user is currently located in a bedroom, in a kitchen, in an office, etc.). Such type of localization algorithm may have a corresponding low thermal impact level on the overall thermals of device 10 and a corresponding low battery impact level on the overall battery usage of device 10. Such thermal and battery impact levels are exemplary. To help conserve battery life for device 10, the resource usage of the localization algorithm can optionally be reduced, limited, scaled back, or otherwise constrained. For example, context engine 200 can limit the amount by which the localization algorithm employ a CPU, application processor, GPU, NPU, and/or other processing resources on device 10. If desired, the localization algorithm can be entirely deactivated to further minimize power consumption.

In accordance with an embodiment associated with input sensing, an audio algorithms control knob for processing input audio signals received by a microphone or output audio signals output by a speaker can optionally be adjusted by centralized user experience manager 30 or context engine 200 based on the current user context (activity) and/or based on the predicted user context (activity). The audio algorithms control knob may determine the quality with which audio signals are being processed at device 10. To help conserve battery life for device 10, the resource usage of the audio algorithms can optionally be reduced, limited, scaled back, or otherwise constrained. For example, context engine 200 can limit the amount by which the audio algorithms employs a central processing unit (CPU), application processor, graphics processing unit (GPU), neural processing unit (NPU), and/or other processing resources on device 10. As another example, consider a scenario in which a hearing-impaired user of device 10 is in a multiuser communication session and is communicating with other users in the session via American Sign Language (ASL). In such scenario, the audio algorithms of device 10 can optionally be scaled back or otherwise constrained since the user will not be communicating with her/her voice.

The knobs above relating to input sensing and processing are illustrative. A second category of knobs might include one or more knobs related to the processing and output of information (e.g., for outputting visual and audio information to the user). The second category of knobs can have a second set of corresponding thermal impact levels T2 and a second of corresponding battery impact levels B2. In accordance with an embodiment associated with an output function, a knob for controlling whether device 10 operates in an audio-only feedback mode can optionally be adjusted by centralized user experience manager 30 or context engine 200 based on the current user context (activity) and/or based on the predicted user context (activity). When the audio-only feedback mode (or feature) is *deactivated*, user alerts output by device 10 can include a graphical, textual, or other visual notification. Such visual alerts will require graphics rendering at subsystem 32 and processing by the display pipeline and will thus consume more power. When the audio-only feedback mode is *activated*, all user alerts can be simplified to only an audio feedback such as an audio message or a chime without displaying any visual alert (e.g., no change to the display is needed). Activating the audio-only feedback mode/feature can thus help circumvent any additional graphics rendering at subsystem 32 and display pipeline processes associated with rendering and outputting graphical, textual, or other visual alerts and can thus reduce power consumption and conserve battery. Toggling the audio-only feedback mode control knob may have a corresponding high thermal impact level on the overall thermals of device 10 and a corresponding high battery impact level on the overall battery usage of device 10. Such thermal and battery impact levels are exemplary. If desired, the audio-only feedback mode can optionally be extended to also include haptic feedback (e.g., vibrational, touch, or other tactile feedback).

In accordance with another embodiment associated with an output function (or mode), a knob for controlling whether device 10 operates in a low light mode can optionally be adjusted by centralized user experience manager 30 or context engine 200 based on the current user context (activity) and/or based on the predicted user context (activity). The "low light mode" of device 10 can refer to and be defined herein as a mode during which certain subsystems within device 10 are activated to enhance the user's vision in a dark environment when the scene light level is below a threshold. For example, the low light mode might boost the overall image brightness to enhance visibility at the expense of noise. As another example, the low light mode might highlight edges of physical objects in the scene to enhance visibility of the physical objects. As another example, the low light mode might activate image stabilization and/or multi-frame integration to improve the quality of captured images in low light. Activating and deactivating the low light mode may have a corresponding high thermal impact level on the overall thermals of device 10 and a corresponding high battery impact level on the overall battery usage of device 10. Such thermal and battery impact levels are exemplary. To help conserve battery life for device 10, the frame rate (or frequency) at which the low light mode is being operated by device 10 in dark environments can optionally be reduced, limited, scaled back, or otherwise constrained. For example, the camera rate at which the low light mode obtains and processes images can be reduced from a nominal frame rate of 30 fps (frames per second) to less than 20 fps, less than 10 fps, or less than 5 fps.

In accordance with another embodiment associated with a output mode for presenting visual information, a knob for controlling whether device 10 operates in a magnify mode can optionally be adjusted by centralized user experience manager 30 or context engine 200 based on the current user context (activity) and/or based on the predicted user context (activity). The "magnify mode" or magnifying mode of device 10 can refer to and be defined herein as a mode during which certain content in the user's field of view (FOV) is magnified for enhanced visibility and a more comfortable user experience. As an example, small text can be magnified to help prevent the user from having to squint to read the small text. Activating and deactivating the magnify mode may have a corresponding high thermal impact level on the overall thermals of device 10 and a corresponding high battery impact on the overall battery usage of device 10. Such thermal and battery impact levels are exemplary. To help conserve battery life for device 10, the frame rate at which the magnifying mode is being operated by device 10 can optionally be reduced, limited, scaled back, or otherwise constrained. For example, the camera rate at which the magnify mode obtains and processes (magnifies) images can be reduced from a nominal frame rate of 30 fps to less than 20 fps, less than 10 fps, or less than 5 fps.

In accordance with another embodiment associated with an output mode for presenting visual information, a knob for controlling whether device 10 operates in a single color mode can optionally be adjusted by centralized user experience manager 30 or context engine 200 based on the current user context (activity) and/or based on the predicted user context (activity). The "single color mode" of device 10 can refer to and be defined herein as a mode during which display content is limited to a single color. As an example, when the single color mode is activated, notifications and other information being displayed by device 10 may be limited to a black and white or grayscale output format. When the single color mode is deactivated, device 10 can be operated in a "full color mode" during which display content output from device 10 can exhibit the full color spectrum. Activating and deactivating the single color mode may have a corresponding medium thermal impact level on the overall thermals of device 10 and a corresponding low battery impact level on the overall battery usage of device 10. Such thermal and battery impact levels are exemplary. To help conserve battery life for device 10, device 10 may be operated in the single color mode (e.g., by activating the single color mode).

In accordance with another embodiment associated with an output function, a knob for controlling the brightness of display(s) 14 in device 10 can optionally be adjusted by centralized user experience manager 30 or context engine 200 based on the current user context (activity) and/or based on the predicted user context (activity). For example, the display brightness can be increased to enhance visibility or can be decreased to reduce visibility. Adjusting the display brightness may have a corresponding medium thermal impact level on the overall thermals of device 10 and a corresponding low battery impact level on the overall battery usage of device 10. Such thermal and battery impact levels are exemplary. To help conserve battery life for device 10, the display brightness of device 10 may be reduced.

In accordance with another embodiment associated with outputting visual information, a knob for controlling the rendering of user interface (UI) elements or other virtual content at graphics rendering subsystem 32 (FIG. 2) can optionally be adjusted by centralized user experience manager 30 or context engine 200 based on the current user context (activity) and/or based on the predicted user context (activity). For example, when the UI/graphics rendering capability is unconstrained, the corresponding UI or virtual content can be rendered based on an awareness of depth and where the virtual content is overlaid on top of the real-world content. To help conserve battery life for device 10, the UI/graphics rendering capability may be constrained such that the UI or virtual content is rendered *without* any awareness of depth and *without* knowledge of where the virtual content is to be overlaid on top of the real-world content, resulting in virtual content that is likely to be incorrectly projected onto the scene from the user's point of view (e.g., the virtual content will *not* be rendered at the correct depth). Adjusting the rendering capability of block 32 in this way may have a corresponding low thermal impact level on the overall thermals of device 10 and a corresponding low battery impact level on the overall battery usage of device 10. Such thermal and battery impact levels are exemplary. If desired, the graphics rendering block 32 can be entirely deactivated to further minimize power consumption (e.g., to completely disable any rendering of UI elements, virtual content, or other computer-generated graphics).

The second category of knobs relating to the output of visual and audio information is illustrative. In accordance with another embodiment, a knob for controlling the wireless connectivity of communications circuitry 20 in device 10 can optionally be adjusted by centralized user experience manager 30 or context engine 200 based on the current user context (activity) and/or based on the predicted user context (activity). For example, a Bluetooth transceiver in circuitry 20 can be temporarily deactivated to limit the Bluetooth connection between device 10 and a companion device. As another example, a WiFi transceiver in circuitry 20 can be temporarily deactivated to limit the WiFi connection between device 10 and a companion device. Adjusting the wireless connectivity of device 10 with one or more external devices may have a corresponding low thermal impact level T3 on the overall thermals of device 10 and a corresponding medium battery impact level B3 on the overall battery usage of device 10. Such thermal and battery impact levels are exemplary. To help conserve battery life for device 10, the wireless connectively of device 10 may be reduced, limited, scaled back, or otherwise constrained.

In accordance with another embodiment, a knob for controlling a notification rate at which device 10 checks for new notifications or updates from one or more applications running on device 10 can optionally be adjusted by centralized user experience manager 30 or context engine 200 based on the current user context (activity) and/or based on the predicted user context (activity). Such notification rate is sometimes referred to as a notification "pull rate." For example, device 10 can check for new emails using a first pull rate, for new messages using a second pull rate equal to or different than the first pull rate, for application updates using a third pull rate equal to or different than the first and second pull rates, and/or can check for other notifications. Adjusting the pull rate(s) with which device 10 checks for new notifications or updates from the various applications running on device 10 may have a corresponding low thermal impact level T4 on the overall thermals of device 10 and a corresponding high battery impact level B4 on the overall battery usage of device 10. Such thermal and battery impact levels are exemplary. To help conserve battery life for device 10, the notification pull rate of device 10 may be reduced, limited, scaled back, or otherwise constrained (e.g., reduced from a nominal pull rate of 2000 pulls per day to less than 1000 pulls/day, to less than 500 pulls/day, to less than 200 pulls/day, or to less than 100 pulls/day).

In accordance with another embodiment, one or more knobs for controlling a logging algorithm for tracking information for the user of device 10 can optionally be adjusted by centralized user experience manager 30 or context engine 200 based on the current user context (activity) and/or based on the predicted user context (activity). Such logging algorithm can help track certain activities relating to the user's health (as an example). To help conserve battery life for device 10, the resource usage of the such logging algorithm can optionally be reduced, limited, scaled back, or otherwise constrained. For example, context engine 200 can limit the amount by which the logging algorithm(s) employ a CPU, application processor, GPU, NPU, and/or other processing resources on device 10.

The knobs shown in FIG. 9 are exemplary and are not intended to limit the scope of the present embodiments. If desired, centralized user experience manager 30 or context engine 200 can tune other knobs or other types of knobs based on the current user context (activity) and/or based on the predicted user context (activity). Depending on the current user context or the predicted user context, centralized user experience manager 30 may elect to prioritize adjusting knobs with the highest battery impact levels and to only adjust the knobs with lower battery impact levels only if necessary. The control of knobs described in connection with the table of FIG. 9 for conserving and extending the battery life of device 10 is illustrative. In other embodiments, the knobs can be adjusted to optimize for thermal mitigation. In yet other embodiments, the knobs can be adjusted based on power pressure. In yet other embodiments, the knobs can be adjusted to optimize for user comfort. In yet other embodiments, the knobs can be adjusted to optimize for performance and the highest quality rendering. If desired, the knobs can be adjusted based on other limited capacity resource at least some of which are being managed by the centralized user experience manager 30.

In general, one or more of the adjustments made by centralized user experience manager 30 can be made in accordance with user experience policies that are customizable based on different user identities, different user classifications or groups, and/or different geographies. For example, at least some of the operations of FIG. 3, the limits described in connection with FIG. 4, the thermal mitigation knobs described in connection with FIG. 5, the comfort-based adjustments described in connection with FIG. 6, the operations of FIG. 8, and/or the adjustment of the knobs described in connection with FIG. 9 can be made or imposed by centralized user experience manager 30 in accordance with policies that vary between different user groups (e.g., different user identify or classification) or different geographies. The different policies can represent verifiably correct policies that are included as part of a user experience policy document. Configured in this way, centralized user experience manager 30 can execute a selected policy in the user experience policy document based on user identity, geographical location, and/or other desired grouping.

The methods and operations described above in connection with FIGS. 1-9 may be performed by the components of device 10 using software, firmware, and/or hardware (e.g., dedicated circuitry or hardware). Software code for performing these operations may be stored on non-transitory computer readable storage media (e.g., tangible computer readable storage media) stored on one or more of the components of device 10 (e.g., the storage circuitry within control circuitry 20 of FIG. 1). The software code may sometimes be referred to as software, data, instructions, program instructions, or code. The non-transitory computer readable storage media may include drives, non-volatile memory such as non-volatile random-access memory (NVRAM), removable flash drives or other removable media, other types of random-access memory, etc. Software stored on the non-transitory computer readable storage media may be executed by processing circuitry on one or more of the components of device 10 (e.g., one or more processors in control circuitry 20). The processing circuitry may include microprocessors, application processors, digital signal processors, central processing units (CPUs), application-specific integrated circuits with processing circuitry, or other processing circuitry.

A physical environment refers to a physical world that people can sense and/or interact with without the aid of an electronic device. In contrast, an extended reality (XR) environment refers to a wholly or partially simulated environment that people sense and/or interact with via an electronic device. For example, the XR environment may include augmented reality (AR) content, mixed reality (MR) content, virtual reality (VR) content, and/or the like. With an XR system, a subset of a person's physical motions, or representations thereof, are tracked, and, in response, one or more characteristics of one or more virtual objects simulated in the XR environment are adjusted in a manner that comports with at least one law of physics.

Many different types of electronic systems can enable a person to sense and/or interact with various XR environments. Examples include head mountable systems, projection-based systems, heads-up displays (HUDs), vehicle windshields having integrated display capability, windows having integrated display capability, displays formed as lenses designed to be placed on a person's eyes (e.g., similar to contact lenses), headphones/earphones, speaker arrays, input systems (e.g., wearable or handheld controllers with or without haptic feedback), smartphones, tablets, and desktop/laptop computers.

To help protect the privacy of users, any personal user information that is gathered by sensors may be handled using best practices. These best practices including meeting or exceeding any privacy regulations that are applicable. Opt-in and opt-out options and/or other options may be provided that allow users to control usage of their personal data.

In accordance with an aspect of the invention, a method of operating an electronic device having a plurality of subsystems is provided, the method includes identifying a user context based a behavior of the plurality of subsystems, and with a centralized user experience manager operable to control the plurality of subsystems, placing a restriction on at least one of the plurality of subsystems based on the identified user context.

Preferably, identifying a user context includes receiving an assertion from one or more subsystems in the plurality of subsystems, and identifying a user context based on the received assertion.

Preferably, the plurality of subsystems includes application-level subsystems including one or more of: a media player subsystem, a media streaming subsystem, a multiuser communication session subsystem, and a voice-controlled automated assistant subsystem, processing units include one or more of: a graphics rendering subsystem, a dynamic foveation subsystem, and a scene understanding subsystem, and sensor subsystems including one or more of a camera, an ambient light sensor, a face and body tracking subsystem, a hands tracking subsystem, a gaze tracking subsystem, an audio sensor, and a temperature sensor.

Preferably, identifying a user context includes one or more of: identifying that the media player subsystem is being used to launch an immersive mode, identifying that the multiuser communication session subsystem is being used to launch a multiuser communication session call, and identifying that the electronic device is being operated in a spatial capture or recording mode.

Preferably, placing a restriction on at least one of the plurality of subsystems based on the identified user context includes one or more of limiting a frequency, limiting a resolution, and disabling a function of the at least one of the plurality of subsystems based on the identified user context.

Preferably, the method includes allowing a given subsystem in the plurality of subsystems to dynamically scale back its operation, and with the centralized user experience manager, setting a constraint that limits a dynamic behavior of the given subsystem.

Preferably, the method includes with the centralized user experience manager, adjusting one or more of the plurality of subsystems in response to detecting a scenario indicative of user discomfort by monitoring gaze or breathing of a user, detecting dropped frames or unstable frame rates at a display of the electronic device, detecting movement in a periphery of a user's field of view, or determining whether a latency associated with one or more of the plurality of subsystems exceeds a predetermined threshold level.

Preferably, the method includes with the centralized user experience manager, performing thermal mitigation operations by adjusting one or more of the plurality of subsystems in response to a detecting rising temperature within the electronic device.

Preferably, performing the thermal mitigation operations includes adjusting thermal mitigation knobs from a list to control the plurality of subsystems, and the thermal mitigation knobs in the list are ordered based on an amount of impact each of the subsystem knobs has on the identified user context.

Preferably, the thermal mitigation knobs in the list include one or more of: a knob for limiting a frame rate of a graphics rendering subsystem in the plurality of subsystems, a knob for limiting automatic speech recognition (ASR), text-to-speech (TTS), and dictation quality of a voice-controlled automated assistant subsystem in the plurality of subsystems, a knob for limiting a streaming quality of a media streaming subsystem in the plurality of subsystems, a knob for limiting a frequency of a face and body tracking subsystem in the plurality of subsystems, a knob for limiting a frequency of a hands tracking subsystem in the plurality of subsystems, and a knob for limiting a frequency of a gaze tracking subsystem in the plurality of subsystems.

In accordance with an aspect of the invention, a method of operating an electronic device having a plurality of subsystems is provided, the method includes monitoring one or more states of the plurality of subsystems, predicting a user context based on the monitored states of the plurality of subsystems, estimating a power consumption level for the predicted user context, and with a centralized user experience manager operable to control the plurality of subsystems, selectively adjusting at least one of the plurality of subsystems based on the estimated power consumption level for the predicted user context.

Preferably, the method includes maintaining historical data of past monitored states of the plurality of subsystems.

Preferably, the method includes monitoring a usage of one or more applications running on the electronic device, and predicting the user context based on the monitored usage of one or more applications running on the electronic device.

Preferably, the method includes maintaining historical data of past monitored usage of one or more applications running on the electronic device.

Preferably, predicting the user context includes predicting the user context based on the monitored states of the plurality of subsystems using a machine learning model trained on data associated with a plurality of users.

Preferably, the method includes predicting the user context based on calendar information.

Preferably, selectively adjusting the at least one of the plurality of subsystems based on the estimated power consumption level for the predicted user context includes constraining the at least one of the plurality of subsystems to conserve charge on a battery in the electronic device.

Preferably, the method includes estimating a power consumption level for a current user context, selectively adjusting the at least one of the plurality of subsystems based on the estimated power consumption level for the predicted user context includes constraining the at least one of the plurality of subsystems in a way that degrades the current user context.

Preferably, the method includes with the centralized user experience manager, predicting a time when the electronic device will be charged to charge a battery in the electronic device, and with the centralized user experience manager, selectively adjusting at least one of the plurality of subsystems based on the predicted time of when the electronic device will be charged.

In accordance with an aspect of the invention, a method of operating an electronic device having a plurality of subsystems and a battery is provided, the method includes monitoring one or more states of the plurality of subsystems, identifying a user context based on the monitored states of the plurality of subsystems, estimating a power consumption level of the identified user context, and with a centralized user experience manager operable to control the plurality of subsystems, adjusting power drawn from the battery by adjusting at least one of the plurality of subsystems based on the estimated power consumption level of the identified user context.

Preferably, the method includes gathering information with one or more sensors in the plurality of subsystems, adjusting the at least one of the plurality of subsystems based on the estimated power consumption level of the identified user context includes reducing a frame rate of the one or more sensors.

Preferably, the method includes running an algorithm for processing sensor data using the at least one of the plurality of subsystems, adjusting the at least one of the plurality of subsystems based on the estimated power consumption level of the identified user context includes deactivating or limiting resource usage of the algorithm for processing the sensor data.

Preferably, the method includes in response to estimating the power consumption level of the identified user context, operating the electronic device in an audio-only feedback mode during which the electronic device outputs only audio or haptic alerts without outputting any visual alerts.

Preferably, the method includes in response to estimating the power consumption level of the identified user context, operating the electronic device in a single color mode during which the electronic device displays only black and white or grayscale content.

Preferably, the method includes controlling a display brightness of the electronic device, rendering virtual content with a graphics rendering subsystem in the plurality of subsystems, identifying one or more objects in a scene with a scene understanding subsystem in the plurality of subsystems, and establishing a wireless connection with one or more external devices using a communications subsystem in the plurality of subsystems, adjusting the at least one of the plurality of subsystems based on the estimated power consumption level of the identified user context includes one or more of: reducing the display brightness of the electronic device, constraining or deactivating the graphics rendering subsystem, constraining or deactivating the scene understanding subsystem, limiting a connectivity of the communications subsystem, and reducing a pull rate with which the electronic device checks for application notifications.

Preferably, the method includes with the centralized user experience manager, directing a hands tracking subsystem in the plurality of subsystems to operate at a first frame rate in response to identifying a first user context based on the monitored states of the plurality of subsystems, with the centralized user experience manager, directing the hands tracking subsystem in the plurality of subsystems to operate at a second frame rate greater than the first frame rate in response to identifying a second user context based on the monitored states of the plurality of subsystems, and with the hands tracking subsystem, detecting a sign language during the second user context.

Preferably, the method includes with the centralized user experience manager, adjusting the plurality of subsystems in accordance with a plurality of customizable user experience policies associated with different user classifications or geographical locations.

Preferably, the method includes with one or more cameras, capturing images of a scene, with one or more displays, outputting the captured images as a passthrough video feed, determining whether the passthrough video feed is being displayed to a user, and in response to determining that the passthrough video feed is not being displayed to the user, adjusting at least one of the plurality of subsystems associated with processing the passthrough video feed.

Preferably, adjusting the at least one of the plurality of subsystems associated with processing the passthrough video feed includes throttling down one or more of: a scene understanding subsystem, a subsystem configured to perform point-of-view correction, and a subsystem configured to model environment lighting.

The foregoing is merely illustrative and various modifications can be made to the described embodiments. The foregoing embodiments may be implemented individually or in any combination.

## Claims

1. A method of operating an electronic device having a plurality of subsystems, the method comprising:
identifying a user context based on a behavior of the plurality of subsystems; and
with a centralized user experience manager operable to control the plurality of subsystems, placing a restriction on at least one of the plurality of subsystems based on the identified user context.

2. The method of claim 1, wherein identifying a user context comprises:
receiving an assertion from one or more subsystems in the plurality of subsystems; and
identifying a user context based on the received assertion.

3. The method of claim 1 or claim 2, wherein the plurality of subsystems comprises:
application-level subsystems comprising one or more of: a media player subsystem, a media streaming subsystem, a multiuser communication session subsystem, and a voice-controlled automated assistant subsystem;
processing units comprising one or more of: a graphics rendering subsystem, a dynamic foveation subsystem, and a scene understanding subsystem; and
sensor subsystems comprising one or more of: a camera, an ambient light sensor, a face and body tracking subsystem, a hands tracking subsystem, a gaze tracking subsystem, an audio sensor, and a temperature sensor.

4. The method of claim 3, wherein identifying a user context comprises one or more of:
identifying that the media player subsystem is being used to launch an immersive mode,
identifying that the multiuser communication session subsystem is being used to launch a multiuser communication session call, and identifying that the electronic device is being operated in a spatial capture or recording mode.

5. The method of any preceding claim, wherein placing a restriction on at least one of the plurality of subsystems based on the identified user context comprises one or more of limiting a frequency, limiting a resolution, and disabling a function of the at least one of the plurality of subsystems based on the identified user context.

6. The method of any preceding claim, further comprising:
allowing a given subsystem in the plurality of subsystems to dynamically scale back its operation; and
with the centralized user experience manager, setting a constraint that limits a dynamic behavior of the given subsystem.

7. The method of any preceding claim, further comprising:
with the centralized user experience manager, adjusting one or more of the plurality of subsystems in response to detecting a scenario indicative of user discomfort by
monitoring gaze or breathing of a user,
detecting dropped frames or unstable frame rates at a display of the electronic device,
detecting movement in a periphery of a user's field of view, or
determining whether a latency associated with one or more of the plurality of subsystems exceeds a predetermined threshold level.

8. The method of any preceding claim, further comprising:
with the centralized user experience manager, performing thermal mitigation operations by adjusting one or more of the plurality of subsystems in response to a detecting rising temperature within the electronic device.

9. The method of claim 8, wherein performing the thermal mitigation operations comprises adjusting thermal mitigation knobs from a list to control the plurality of subsystems, and wherein the thermal mitigation knobs in the list are ordered based on an amount of impact each of the subsystem knobs has on the identified user context.

10. The method of claim 9, wherein the thermal mitigation knobs in the list comprise a knob for limiting a frame rate of a graphics rendering subsystem in the plurality of subsystems.

11. The method of claim 9 or claim 10, wherein the thermal mitigation knobs in the list comprise a knob for limiting automatic speech recognition (ASR), text-to-speech (TTS), and dictation quality of a voice-controlled automated assistant subsystem in the plurality of subsystems.

12. The method of any of claims 9 to 11, wherein the thermal mitigation knobs in the list comprise a knob for limiting a streaming quality of a media streaming subsystem in the plurality of subsystems.

13. The method of any of claims 9 to 12, wherein the thermal mitigation knobs in the list comprise a knob for limiting a frequency of a face and body tracking subsystem in the plurality of subsystems.

14. The methods of any of claims 9 to 13, wherein the thermal mitigation knobs in the list comprise a knob for limiting a frequency of a hands tracking subsystem in the plurality of subsystems.

15. The method of any of claims 9 to 14, wherein the thermal mitigation knobs in the list comprise a knob for limiting a frequency of a gaze tracking subsystem in the plurality of subsystems.
